**Europäisches Patentamt**

(19) **European Patent Office**

**Office européen des brevets**

(11) Numéro de publication: **0 019 537**
**B1**

(12) **FASCICULE DE BREVET EUROPEEN**

(45) Date de publication du fascicule du brevet:
**16.03.83**

(21) Numéro de dépôt: **80400652.6**

(22) Date de dépôt: **12.05.80**

(51) Int. Cl.³: **B 65 G 47/90,** B 21 D 43/10

(54) **Pince éclipsable.**

(30) Priorité: **22.05.79 FR 7913910**

(43) Date de publication de la demande:
**26.11.80 Bulletin 80/24**

(45) Mention de la délivrance du brevet:
**16.03.83 Bulletin 83/11**

(84) Etats contractants désignés:
**DE GB SE**

(56) Documents cités:
**DE-A-1 802 379**
**FR-A-1 179 688**
**FR-A-2 130 288**
**GB-A-1 422 258**
**US-A-2 856 079**
**US-A-3 630 391**

(73) Titulaire: **SOCIETE ANONYME AUTOMOBILES CITROEN, 117 à 167, Quai André Citroen, F-75747 Paris Cedex 15 (FR)**
Titulaire: **AUTOMOBILES PEUGEOT, 75, avenue de la Grande Armée, F-75116 Paris (FR)**

(72) Inventeur: **Coatantiec, Alain, 59 bis, rue de Rennes, F-35170 Bruz (FR)**

(74) Mandataire: **Boivin, Claude, 9, rue Edouard-Charton, F-78000 Versailles (FR)**

ACTORUM AG

Pince éclipsable

La présente invention concerne une pince pour déplacer des objets, tels que des tôles, sur un plan de chargement, qui comprend un bras à l'une des extrémités duquel sont montées deux mâchoires articulées, des moyens étant prévus pour limiter l'ouverture des mâchoires.

Pour alimenter un appareil tel qu'une presse en pièces, par exemple en tôles, on utilise souvent une pince qui saisit la pièce et la déplace vers l'appareil sur un plan de chargement. Après avoir déplacé, puis libéré la pièce, la pince revient dans sa position initiale pour saisir une nouvelle pièce. Mais le mouvement de retour de la pince gêne la mise en place de cette nouvelle pièce sur le plan de chargement et l'on est pratiquement obligé, jusqu'à présent, d'attendre que la pince ait repris sa position de départ pour procéder à cette mise en place.

On connaît par la demande de brevet français 2 130 288, une machine pour le mesurage et la coupe en longueur de fils métalliques munie d'une pince qui comporte un coulisseau à l'une des extrémités duquel une première mâchoire est articulée, une seconde mâchoire étant montée pivotante sur la première; mâchoire porte un appendice qui vient rencontrer la première mâchoire, ce qui limite l'angle d'ouverture des mâchoires.

La pince de cette machine ne peut être utilisée pour saisir une tôle sur un plan de chargement horizontal et la déplacer sur ce plan; il est, en effet, nécessaire que la pince s'éclipse pendant le mouvement de retour, afin de laisser le passage à la tôle suivante qui vient prendre place sur le plan de chargement, problème qui n'est pas résolu par la pince connue.

La présente invention a pour objet une pince qui s'éclipse sous le plan de chargement pendant son retour, ce qui permet de mettre en place sur ce plan une pièce à charger pendant le mouvement de retour de la pince ou même pendant son mouvement d'aller; le temps de chargement de la pièce est ainsi notablement diminué.

La pince selon l'invention est du type décrit ci-dessus et est caractérisée en ce que ses deux mâchoires sont articulées respectivement en deux axes distincts l'un de l'autre sur un corps de pince, lui-même monté pivotant sur le bras, et sont reliées l'une à l'autre par une bielle, de manière à s'ouvrir et se fermer en synchronisme, et en ce que les moyens de commande des mâchoires comprennent d'une part un vérin à double effet reliant le bras à l'une des mâchoires, et d'autre part un dispositif télescopique à ressort reliant le corps de pince au bras et tel qu'il tende à ramener le corps de pince dans une position dans laquelle les mâchoires peuvent saisir un objet dans le plan de chargement.

Cette pince est placée sous le plan de chargement, au droit d'une fente prévue dans ce plan de façon que, lorsque les deux chambres du vérin sont à l'air libre, le corps de pince fasse partiellement saillie au-dessus dudit plan, les deux mâchoires se trouvant en position ouverte de part et d'autre de ce dernier. Par actionnement du vérin dans le sens convenable, les deux mâchoires se referment sur l'objet à transporter. En fin de déplacement, on actionne le vérin dans le sens contraire, ce qui a pour effet tout d'abord d'ouvrir les mâchoires, puis quand celles-ci se trouvent dans la position d'ouverture maximale, de faire pivoter le corps de pince vers le bas en comprimant le dispositif télescopique. Le corps de pince est ainsi ramené sous le plan de chargement, ce qui permet de ramener la pince dans sa position initiale pendant qu'un nouvel objet est placé sur ledit plan. Quand la pince se trouve de nouveau dans sa position de départ, on met à l'air libre les deux chambres du vérin. Le dispositif télescopique se détend alors en ramenant vers le haut le corps de pince, les mâchoires restant en position d'ouverture.

On a décrit ci-après, à titre d'exemple non limitatif, un mode de réalisation de la pince selon l'invention, avec référence aux dessins annexés dans lesquels:

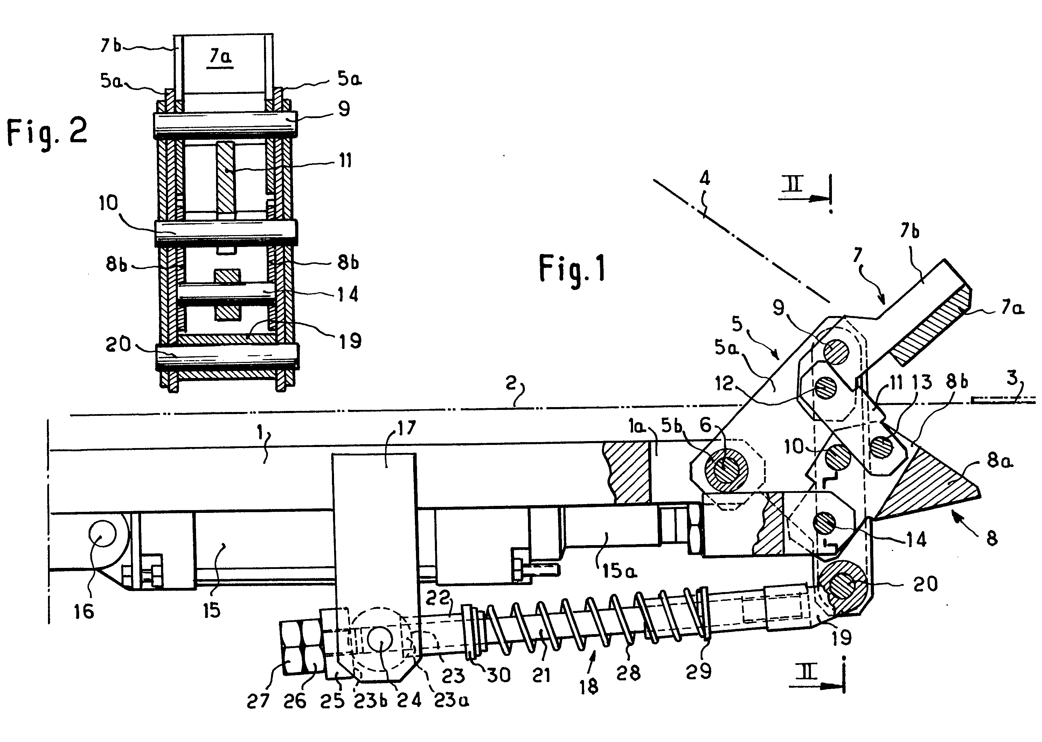

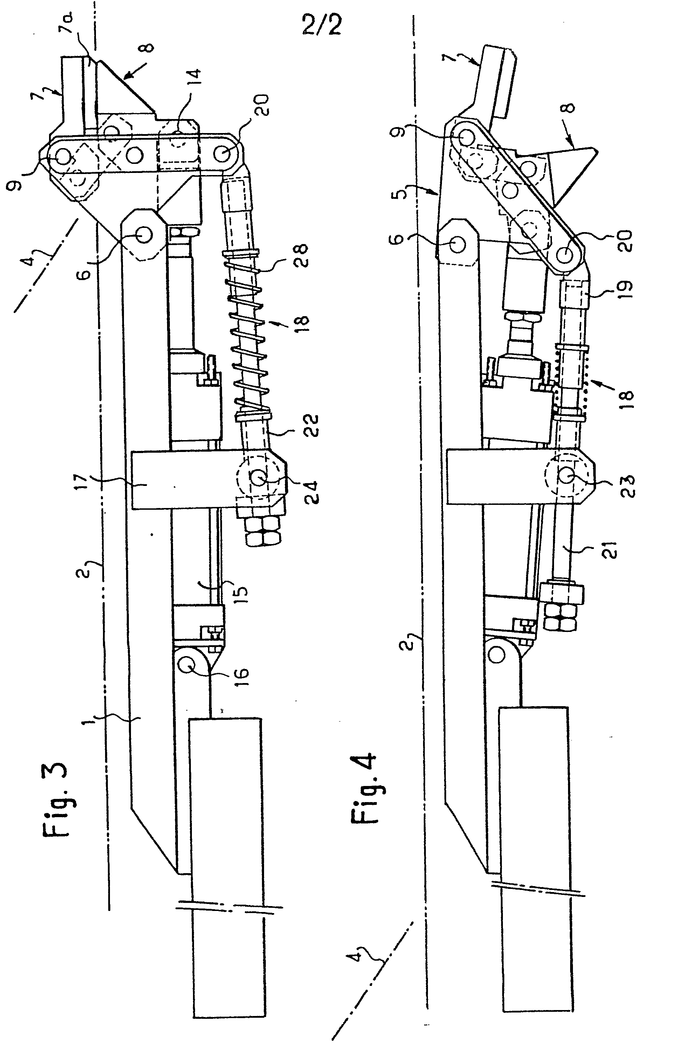

La fig. 1 montre la pince en position ouverte, en élévation avec coupe partielle; la fig. 2 en est une coupe suivant II–II de la fig. 1; la fig. 3 montre en élévation la pince en position de chargement; la fig. 4 montre en élévation la pince en position de retour.

Telle qu'elle est représentée au dessin, la pince selon l'invention comprend un bras porte-pince 1 mobile longitudinalement sous un plan de chargement 2 sur lequel une tôle 3 peut être déchargée par un plan incliné 4.

L'extrémité du bras 1 est en forme de chape 1a et un corps de pince 5 est monté pivotant en 6. Le corps de pince est formé de deux flasques 5a réunis l'un à l'autre par une partie cylindrique 5b traversée par l'axe 6. Une mâchoire supérieure 7 et une mâchoire inférieure 8 sont montées pivotantes à l'intérieur du corps de pince 5 respectivement autour des axes 9 et 10. La mâchoire supérieure 7 est constituée d'une partie pleine 7a ayant sensiblement la forme d'un parallélépipède et qui sert de bec à la mâchoire, et de deux flasques 7b qui sont disposés de part et d'autre du bec 7a et qui sont traversés par l'axe 9. De son côté, la mâchoire inférieure 8 se compose d'une partie pleine 8a en forme de prisme triangulaire qui sert de bec à la mâchoire et de deux flasques 8b traversés par l'axe 10. Les deux mâchoires sont reliées l'une à l'autre par une bielle 11 dont les extrémités sont articulées sur les mâchoires respectivement en 12 et 13.

La mâchoire inférieure 8 est reliée par un axe 14 à la tige d'un piston 15a d'un vérin à double effet 15 qui est articulé en 16 sur le bras 1.

Le corps de pince 5 est relié à deux pattes 17 solidaires du bras 1 par un dispositif télescopique à ressort désigné dans son ensemble par la référence 18. Ce dispositif comprend un bras 19 qui est monté pivotant en 20 sur le corps de pince 5

ction40 019 5373

et sur lequel est fixée une tige 21 mobile dans un manchon 22. Ce manchon est soudé à une pièce cylindrique 23 traversée par la tige 21 et reliée aux pattes 17 par deux demi-axes 24. Cette pièce 23 comporte deux parties plates 23a et 23b dont la première sert d'appui au manchon 22, alors que l'autre forme butée, pour limiter la course de la tige 21, par coopération avec une rondelle 25 montée sur cette tige et immobilisée par un écrou 26 et un contre-écrou 27. Un ressort 28 interposé entre un épaulement 29 du bras 19 et un épaulement 30 du manchon 22 tend à faire sortir la tige du manchon et appliquer la rondelle 25 contre la butée 23b.

Les figs. 1 et 2 montrent la pince en position ouverte; le corps de pince 5 est engagé dans une ouverture longitudinale prévue dans le plan de glissement 2, les deux mâchoires 7 et 8 se trouvant de part et d'autre de ce plan.

La pince est alors déplacée vers la tôle 3 qui s'engage entre les mâchoires 7 et 8. Puis l'air sous pression est admis dans le côté de grande section du vérin 15, c'est-à-dire du côté qui tend à déplacer vers l'extérieur la tige de piston 15a de ce vérin. Cette tige 15a pousse alors sur l'axe 14 la reliant à la mâchoire inférieure 8. Comme les axes 6 et 20 du corps de pince 5 sont fixes, ce corps de pince reste fixe et la mâchoire 8 pivote alors vers le haut autour de son axe 10 en venant en position de fermeture.

En pivotant, la mâchoire 8 entraîne l'axe 13 qui se déplace suivant un arc de cercle centré sur l'axe 10. L'axe 12 doit setrouver à une distance constante de cet axe 13; il se déplace par la suite suivant un arc de cercle centré sur l'axe 9 en entraînant la mâchoire 7 qui vient en position de fermeture (fig. 3), la tôle 3 étant ainsi serrée entre les deux mâchoires 7 et 8.

La pince est alors déplacée longitudinalement de façon à amener la tôle 3 à l'endroit voulu. Quand la pince est arrivée à destination, on admet la pression au vérin 15, côté tige, c'est-à-dire du côté qui tend à faire rentrer cette tige dans le corps du vérin. Les deux mâchoires 7 et 8 s'écartent alors l'une de l'autre, ce qui permet le retrait de la tôle 3.

La tôle 3 étant relâchée et la pression maintenue dans le vérin, côté tige, les deux mâchoires 7 et 8 continuent de s'écarter l'une de l'autre jusqu'à ce que la bielle 11 vienne rencontrer l'axe 9, ce qui limite le mouvement d'ouverture des mâchoires. A partir de ce moment, l'axe 14 en continuant de se déplacer fait basculer le corps de pince 5 autour de l'axe 6, en comprimant le dispositif télescopique 18; l'ensemble se trouve alors dans la position de la fig. 4.

Puis le bras 1 est ramené dans sa position initiale. Comme l'ensemble de la pièce se trouve sous le plan de chargement 2, une tôle 3 peut se trouver sur ce plan en y étant mise soit pendant le mouvement d'aller de la pince, soit pendant son mouvement de retour.

Lorsque la pince est venue derrière la tôle 3 à charger, en passant sous cette tôle, les deux chambres du vérin 15 sont mises à l'air libre. Le dispositif télescopique se détend jusqu'à ce que la rondelle 25 vienne buter contre la surface 23b de la pièce cylindrique 23 en faisant pivoter le corps de pince 5 autour de l'axe 6. Les deux mâchoires 7 et 8 conservent pratiquement leur position par rapport au corps de pince et l'axe 14 entraîne la tige de piston du vérin, qui vient prendre une position intermédiaire pendant que le vérin pivote autour de l'axe 16.

Le corps de pince s'engage ainsi dans l'ouverture longitudinale du plan de glissement 2 et la pince occupe de nouveau la position de la fig. 1.

Il va de soi que la présente invention ne doit pas être considérée comme limitée au mode de réalisation décrit et représenté, mais en couvre, au contraire, toutes les variantes dans le cadre défini par la revendication unique.

**Revendication**

Pince pour déplacer des objets tels que des tôles sur un plan de chargement, comprenant un bras (1) à l'une des extrémités duquel sont montées deux mâchoires (7 et 8) articulées, des moyens étant prévus pour limiter l'ouverture des mâchoires, caractérisée en ce que les deux mâchoires (7 et 8) sont articulées respectivement en deux axes (9, 10) distincts l'un de l'autre sur un corps de pince (5), lui-même pivotant sur le bras (1), et sont reliées l'une à l'autre par une bielle (11), de manière à s'ouvrir et se fermer en synchronisme, et en ce que les moyens de commande des mâchoires comprennent d'une part un vérin à double effet (15) reliant le bras (1) à l'une des mâchoires, et d'autre part un dispositif télescopique à ressort (18) reliant le corps de pince (5) au bras (1) et tel qu'il tende à ramener le corps de pince (5) dans une position dans laquelle les mâchoires peuvent saisir un objet dans le plan de chargement.

**Claim**

Gripper for displacing in a loading plane objects such as sheets of metal, comprising an arm (1) at one of the ends of which two jaws (7, 8) are pivotally mounted, means being provided for limiting the opening of the jaws, characterized in this that the two jaws (7, 8) are respectively pivoted on two pins (9, 10) distinct from one another on a body of the gripper (5), itself pivoting on the arm (1), and are connected to one another by a rod (11), in such a manner as to open and close in synchronism, and in this that the control means for the jaws comprise on the one hand a double-acting actuator (15) connecting the arm (1) to one of the jaws, and on the other hand a telescopic device with a spring (18) connecting the gripper body (5) to the arm (1) and such that it tends to return the body of the gripper (5) into a position in which the jaws can engage an object in the loading plane.

**Patentanspruch**

Zange zum Verschieben von Gegenständen, beispielsweise von Blechen auf einer Beschikkungsebene, mit einem Hebel (1), an dessen einem Ende zwei Backen (7 und 8) gelenkig angeordnet sind, wobei eine Einrichtung zur Begrenzung der Öffnung der Backen vorgesehen ist, dadurch gekennzeichnet, dass die beiden Backen (7 und 8) um zwei verschiedene Achsen (9 bzw. 10) an einem Zangenkörper (5) schwenkbar gelagert sind, welcher selbst am Hebel (1) schwenkbar ist, und miteinander durch eine Schubstange (11) verbunden sind dergestalt, dass sie sich gleichzeitig öffnen und schliessen, und dass die Einrichtung zur Betätigung der Backen einerseits einen doppeltwirkenden Arbeitszylinder (15) aufweist, der den Hebel (1) mit einer der Backen verbindet, und anderseits eine teleskopische, mit einer Feder versehene Einrichtung (18), welche den Zangenkörper (5) mit dem Hebel (1) verbindet in der Weise, dass sie den Zangenkörper (5) in eine Stellung zurückzuführen sucht, in welcher die Backen einen Gegenstand in der Beschickungsebene ergreifen können.

Fig. 2

Fig.1

7b 7a 5a 5a 9 11 10 8b 8b 14 19 20

4 II 7 7b 7a 9 5 5a 12 11 13 8b 3 2 1a 5b 6 10 8a 1 17 8 15a 14 16 15 20 22 19 27 26 25 23b 24 23a 23 30 21 18 28 29 II

0 019 537

Fig. 3

Fig. 4

2/2

0 019 537